# FASCICULE DE BREVET EUROPEEN

(11) **EP 3 196 425 B1**
(45) Date de publication et mention de la délivrance du brevet: **16.10.2019**
(21) Numéro de dépôt: 17150642.1
(22) Date de dépôt: 09.01.2017
(51) Int. Cl.: F01D 25/18, G01F 23/00, F01M 11/12

(54) **SYSTÈME DE MAINTENANCE D'UNE TURBOMACHINE D'AÉRONEF**
WARTUNGSSYSTEM EINES TURBOTRIEBWERKS EINES LUFTFAHRZEUGS
MAINTENANCE SYSTEM OF AN AIRCRAFT TURBINE ENGINE

(30) Priorité: 21.01.2016 BE 201605046
(43) Date de publication de la demande: 26.07.2017
(73) Titulaire: Safran Aero Boosters SA, 4041 Herstal (BE)
(72) Inventeur: RAIMARCKERS, Nicolas, 4263 Tourinne (BE); THOMAS, Vincent, 4342 Hognoul (BE); SERVAIS, Bruno, 4260 Braives (BE)
(74) Mandataire: Gevers Patents

(56) Documents cités:
- EP-A1- 2 829 698
- EP-A2- 1 280 316
- FR-A1- 2 958 911
- US-A1- 2006 238 384

## Description

### Domaine technique

Selon un premier aspect, la présente invention concerne un système de maintenance d'une turbomachine d'aéronef. Selon un deuxième aspect, la présente invention concerne un procédé de maintenance au sol d'une turbomachine d'un aéronef.

### Art antérieur

Dans le domaine de l'aéronautique, des opérations de maintenance au sol sont nécessaires. En général, les compagnies aériennes réclament notamment de pouvoir mesurer facilement le niveau d'huile des moteurs d'avions entre deux vols, par exemple suite à une demande du pilote.

Pour connaître le niveau d'huile, une procédure de mesure directe est généralement suivie. Selon une première approche, un opérateur regarde au travers d'une fenêtre de visualisation présente sur une face du réservoir d'huile pour visualiser directement le niveau d'huile. Selon une deuxième approche, il plonge un stick (ou tige aussi appelée dip stick) à travers le bouchon du réservoir d'huile. En retirant le stick, il est possible de déduire le niveau d'huile en fonction de la position de la zone du stick recouverte d'huile. Les deux approches de mesure directe du niveau d'huile peuvent être combinées.

Une telle mesure directe du niveau d'huile d'un réservoir d'huile d'un moteur d'avion présente certains inconvénients. Lorsque l'on utilise une fenêtre de visualisation, il est nécessaire de réaliser des opérations de découpe, planage et taraudage pour obtenir un réservoir d'huile muni d'une telle fenêtre. Il faut également mettre en oeuvre des solutions d'étanchéité particulières et prendre en compte les risques liés au feu. L'utilisation d'un stick ou tige à insérer au travers du bouchon d'un réservoir d'huile implique d'augmenter la dimension et la complexité de ce bouchon.

Ainsi, la conception des réservoirs d'huile doit être spécifique pour permettre une visualisation directe du niveau d'huile comme cela est fait habituellement. Cela peut limiter le choix des formes de réservoir d'huile possibles et augmenter les coûts de fabrication des réservoirs d'huile. Par ailleurs, une méthode de maintenance impliquant visualisation directe du niveau d'huile est relativement longue. Or, il est voulu d'avoir des temps de maintenance aussi courts que possible pour réduire le temps pendant lequel un avion doit rester au sol. Le document EP1280316 décrit un dispositif de collecte des données relié à des moyens de communication sans fil dans un aéronef. Le document US2006/0238384 décrit un système de communication entre un appareil mobile et une docking station située dans un aéronef afin de pouvoir afficher des données reçues de l'extérieur de l'aéronef ou entre membres de l'équipage.

### Résumé de l'invention

Selon un premier aspect, un des buts de l'invention est de fournir un système de maintenance d'une turbomachine d'aéronef qui permette une maintenance plus aisée de ladite turbomachine. A cet effet, l'invention propose un système de maintenance d'une turbomachine d'aéronef comprenant :
- une turbomachine d'aéronef comprenant :
   ∘ un réservoir d'huile,
   ∘ un capteur apte à mesurer un niveau d'huile dans le réservoir d'huile,
   ∘ des moyens de transmission d'un signal couplés audit capteur pour transmettre une information relative à un niveau d'huile mesuré par ledit capteur,
caractérisé en ce que :
- ladite turbomachine comprend des moyens de communication en champ proche couplés auxdits moyens de transmission, pour communiquer en champ proche à l'extérieur de l'aéronef une information représentative d'un niveau d'huile mesuré par ledit capteur, et en ce que
- ledit système de maintenance comprend un appareil mobile apte à communiquer en champ proche avec lesdits moyens de communication en champ proche et comprenant des moyens d'affichage pour afficher ladite information représentative d'un niveau d'huile communiquée par lesdits moyens de communication en champ proche à un opérateur situé au sol en-dehors de l'aéronef et portant ledit appareil mobile.

Les moyens de communication permettent de communiquer à l'extérieur de l'aéronef une information représentative d'un niveau d'huile qui est mesuré par le capteur. A l'extérieur de l'aéronef signifie ici à l'extérieur de la cabine de l'aéronef destinée à recevoir les passagers et les membres d'équipage. Il n'y a donc plus besoin de prévoir une fenêtre de visualisation sur le réservoir d'huile ou un système utilisant un stick ou tige. Le design du réservoir d'huile peut donc être plus simple (par exemple, il ne faut plus prévoir d'endroit spécifique pour une fenêtre de visualisation ou de guide pour le stick). La conception du ou des réservoirs d'huile peut également être plus variée. La procédure de fabrication d'un réservoir d'huile d'une turbomachine est également plus simple et moins coûteuse avec l'invention, pour les mêmes raisons. Les risques de fuite sont également réduits. Une fenêtre de visualisation et un guide pour recevoir un stick sont en effets des sources possibles de faiblesse pour des questions d'étanchéité.

Avec le système de maintenance d'une turbomachine de l'invention, la procédure de maintenance est plus simple car il suffit de lire l'information communiquée par les moyens de communication. Il n'y a plus besoin d'aller visualiser le niveau d'huile au travers d'une fenêtre de visualisation ou de plonger un stick au travers du bouchon du réservoir d'huile. Par rapport à l'utilisation d'une fenêtre de visualisation, l'invention permet d'avoir une information plus fiable relative à un niveau d'huile du réservoir d'huile. De la condensation ou des gouttes de pluie par exemple peuvent rendre la lecture d'un niveau d'huile difficile et peut fiable.

Différents types de couplage peuvent être imaginés entre les moyens de transmission et le capteur. Des exemples de types de couplage possible sont couplages électromagnétiques, couplages électriques. De préférence, les moyens de transmission sont reliés au capteur, par exemple à l'aide de fils électriques.

Différents types de moyens de communication peuvent être imaginés comme cela est décrit ci-dessous. Les moyens de communication peuvent par exemple être des moyens de communication visuelle tels que par exemple des moyens d'affichage (écran par exemple). De préférence, le système de maintenance d'une turbomachine comprend aussi des moyens de réception dudit signal. De préférence les moyens de communication comprennent des moyens d'affichage. Les moyens de communication peuvent aussi être des moyens de communication électriques ou électromagnétiques.

Un exemple d'aéronef est un avion. Des exemples de turbomachine sont un turbopropulseur et un turboréacteur.

Il existe différents modes de réalisation possibles de l'invention, qui peuvent être pris ensemble ou séparément.

Ainsi, lesdits moyens de communication peuvent par exemple être aptes à communiquer une information représentative d'un niveau d'huile mesuré par ledit capteur dans un rayon de dix mètres au plus autour de ladite turbomachine, de préférence cinq mètres au plus.

En associant le centre de gravité de la turbomachine au centre d'une sphère, les moyens de communication peuvent alors communiquer une information représentative d'un niveau d'huile mesuré par le capteur à une distance au plus égale à dix (de préférence cinq) mètres mesurée à partir de ce centre de sphère.

Pour certains modes de réalisation, les moyens de communication peuvent communiquer ladite information dans un rayon de vingt mètres au plus autour de la turbomachine.

Selon un autre mode de réalisation possible, lesdits moyens d'affichage comprennent par exemple un écran à LED ou LCD. Les abréviations anglaises 'LED' et LCD' sont connues d'un homme du métier. Lesdits moyens d'affichage peuvent par exemple être portés par ledit réservoir d'huile. Selon une autre réalisation possible, les moyens d'affichage sont situés sur une nacelle de la turbomachine. Les moyens d'affichage peuvent être configurés pour afficher ladite information de manière permanente. Selon une autre réalisation possible, la turbomachine comprend en outre des moyens de commande couplés auxdits moyens d'affichage, configurés pour commander un affichage de ladite information. Les moyens de commande comprennent par exemple un bouton de commande.

Selon l'invention, les moyens de communication comprennent des moyens de communication en champ proche. Les termes 'communication en champ proche' sont connus d'un homme du métier. Il s'agit typiquement d'une technologie de communication sans fil à courte portée et haute fréquence (fréquence supérieure à 10 MHz en général), permettant l'échange d'information généralement sur une distance au plus égale à 1 m, voire 10 cm. Les moyens de communication en champ proche comprennent de préférence un émetteur d'onde électromagnétique pour communiquer à l'extérieur de l'aéronef une information relative à un niveau d'huile mesuré par le capteur.

De préférence, les moyens de communication comprennent une puce RFID. La puce RFID est de préférence associée à une radio-étiquette et/ou à une antenne. En utilisant un lecteur adéquat (émetteur de radiofréquences), il est alors possible de connaître le niveau d'huile mesuré par le capteur. Par exemple, les moyens de communication comprennent une prise sur laquelle on vient brancher l'appareil mobile.

De préférence, l'appareil mobile est dans un rayon de maximum dix mètres autour de ladite turbomachine, de préférence maximum cinq mètres.

De préférence, le système de maintenance comprend des moyens de traitement pour traiter un signal transmis par les moyens de transmission et des moyens d'estimation aptes à estimer un besoin de remplissage dudit réservoir d'huile à partir de l'information transmise par les moyens de transmission. Avec ce mode de réalisation préféré, il est possible de savoir rapidement et facilement s'il est nécessaire de prévoir un remplissage d'un réservoir d'huile. Grâce aux moyens de traitement, il est possible d'utiliser pour le système de maintenance d'une turbomachine différentes données et pas uniquement un niveau d'huile absolu. De préférence, les moyens de traitement et d'estimation sont incorporés dans l'appareil mobile. De préférence, l'appareil mobile comprend lesdits moyens de traitement et d'estimation.

De préférence, le système de maintenance d'une turbomachine comprend des moyens d'enregistrement et de stockage couplés auxdits moyens de transmission pour enregistrer des informations relatives à des niveaux d'huile mesurés par ledit capteur. Avec ce mode de réalisation préféré, il est possible de conserver un historique des niveaux d'huile déterminés par le passé entre vols. Cela peut faciliter la maintenance à long terme. Par exemple, en comparant les différences de niveaux d'huile entre deux vols à différents instants, on peut par exemple déduire que la turbomachine consomme de plus en plus d'huile et qu'un entretien voire un remplacement de certaines pièces s'imposent. De préférence, les moyens d'enregistrement et de stockage sont compris dans le système de maintenance d'une turbomachine. Par exemple les moyens d'enregistrement et de stockage sont compris dans la turbomachine. Par exemple les moyens d'enregistrement et de stockage sont compris dans l'appareil mobile. Des moyens d'enregistrement et de stockage peuvent également être présents dans l'aéronef, par exemple au niveau de la cabine de pilotage afin que les données stockées puissent être consultées par exemple par les pilotes lorsque la turbomachine est à l'arrêt et que la transmission d'informations par FADEC n'est pas disponible.

Selon un deuxième aspect, les inventeurs proposent un procédé de maintenance au sol d'une turbomachine d'aéronef et comprenant les étapes suivantes :
- fournir une turbomachine comprenant :
   ∘ un réservoir d'huile,
   ∘ un capteur apte à mesurer un niveau d'huile dans le réservoir d'huile,
   ∘ des moyens de transmission d'un signal couplés audit capteur pour transmettre une information relative à un niveau d'huile mesuré par ledit capteur,
   ∘ des moyens de communication en champ proche, couplés auxdits moyens de transmission, pour communiquer à l'extérieur de l'aéronef une information représentative d'un niveau d'huile mesuré par ledit capteur,
- fournir à proximité (c'est-à-dire de préférence à maximum dix mètres) de ladite turbomachine un appareil mobile apte à communiquer avec lesdits moyens de communication et comprenant des moyens d'affichage pour afficher une information représentative d'un niveau d'huile communiquée par lesdits moyens de communication,
- lire à l'extérieur de l'aéronef ladite information communiquée par les moyens de communication en visualisant un affichage sur ledit appareil mobile,
- déduire un état de remplissage dudit réservoir d'huile à partir de la lecture effectuée à l'étape précédente.

La lecture de l'information communiquée par les moyens de communication peut être directe ou indirecte en fonction des moyens de communication du système de maintenance de la turbomachine de l'invention (différents modes de réalisation sont possibles comme cela est expliqué pour le système de maintenance d'une turbomachine de l'invention).

Les avantages présentés pour le système de maintenance d'une turbomachine selon le premier aspect de l'invention s'appliquent au procédé de maintenance au sol de l'invention, mutatis mutandis. En particulier, la procédure de maintenance est plus simple et plus rapide que ce qui se fait actuellement. Par simple inspection visuelle d'un écran d'affichage situé sur l'appareil mobile par exemple, il est possible de connaître le niveau d'huile du réservoir d'huile d'une turbomachine. Le gain économique est substantiel car l'opération de maintenance doit être raccourcie autant que possible pour réduire la durée d'immobilisation de l'aéronef.

L'étape de fournir un appareil mobile à proximité de la turbomachine est préférentiellement adopté lorsque les moyens de communication comprennent des moyens de communication en champ proche ou une puce RFID. Dans le cas d'une puce RFID, l'appareil mobile porté par l'opérateur comprend de préférence un émetteur de radiofréquences qui va fournir l'énergie nécessaire à la puce RFID pour qu'elle puisse communiquer l'information représentative d'un niveau d'huile mesuré par le capteur. L'appareil mobile est positionné à proximité de la turbomachine, c'est-à-dire à de préférence à maximum dix mètres et de préférence dans un rayon de maximum cinq mètres.

Selon un mode de réalisation possible, l'appareil mobile traite l'information communiquée par les moyens de communication. Par exemple l'appareil mobile peut comparer le niveau d'huile mesuré par le capteur avec un niveau seuil de référence pour la turbomachine. L'appareil mobile peut ensuite fournir une alerte si le niveau mesuré est inférieur au niveau seuil de référence.

### Brève description des figures

La figure 1 montre un aéronef ayant quatre turbomachines ;
La figure 2 montre schématiquement un exemple possible de la turbomachine selon l'invention.

Les dessins des figures ne sont pas à l'échelle. La présence de numéros de référence aux dessins ne peut être considérée comme limitative, y compris lorsque ces numéros sont indiqués dans les revendications.

### Description détaillée de certains modes de réalisation de l'invention

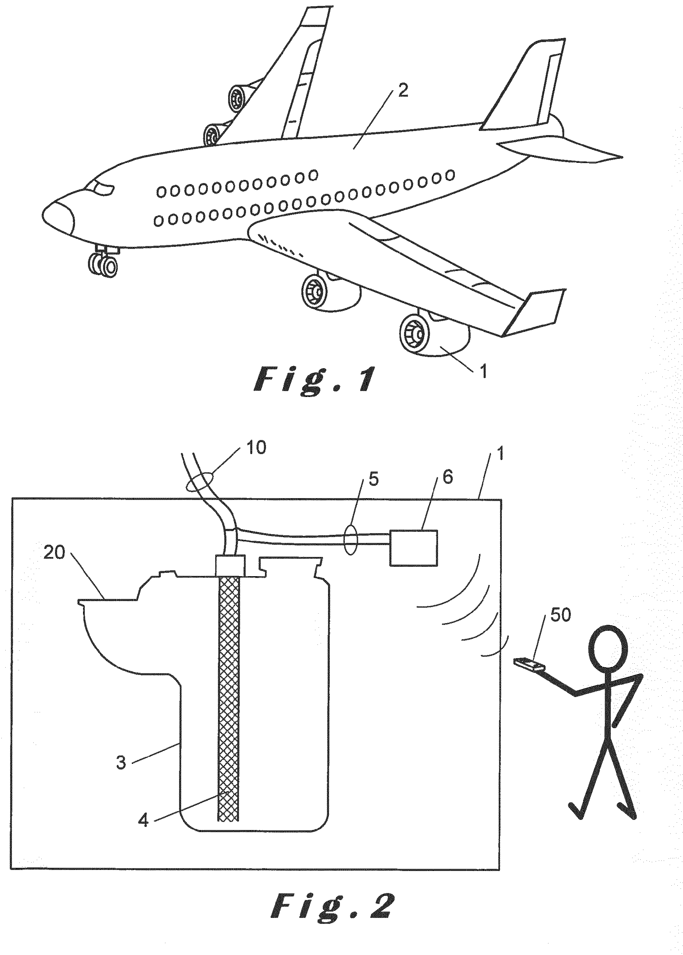

La figure 1 illustre un avion, exemple d'un aéronef 2, ayant quatre turbomachines 1. Un aéronef 2 comprend généralement un nombre paire de turbomachines 1, par exemple deux ou quatre. Le terme turbomachine 1 est connu d'un homme du métier. Il peut par exemple s'agir d'un turboréacteur ou d'un turbopropulseur. Une turbomachine 1 comprend généralement différentes parties telles que par exemple une soufflante, un ou plusieurs compresseurs, un circuit de refroidissement, une chambre de combustion, une ou plusieurs turbines.

La figure 2 illustre schématiquement une turbomachine 1, un appareil mobile 50 et un opérateur selon l'invention. La turbomachine comprend un ou plusieurs réservoirs d'huile 3 pour assurer la lubrification de différents éléments. Le réservoir d'huile 3 comprend une entrée 20 pour y apporter de l'huile. La turbomachine 1 selon l'invention comprend aussi un capteur 4 pour mesurer un niveau d'huile dans le réservoir d'huile 3. Différents types de capteurs connus d'un homme du métier peuvent être utilisés. Un capteur 4 utilisé pour envoyer une information relative à un niveau d'huile vers un système de type FADEC (interface entre le cockpit et la turbomachine 1), peut par exemple être utilisé. Cet exemple est illustré à la figure 2 où des connexions électriques 10 permettent d'envoyer vers le système FADEC une mesure de niveau d'huile faite par le capteur 4. Selon une autre variante possible, la turbomachine 1 selon l'invention comprend un capteur 4 de niveau spécifique, indépendant d'un capteur qui serait utilisé pour envoyer une information de niveau d'huile vers le système FADEC ou vers le cockpit.

Des moyens de transmission 5 sont couplés au capteur 4 pour transmettre une information relative à un niveau d'huile mesuré par le capteur 4. Comme cela est illustré à la figure 2, les moyens de transmission 5 peuvent par exemple être des fils électriques reliés aux connections électriques 10 utilisées pour relayer une information de niveau d'huile vers le système FADEC. Cela est par exemple le cas lorsque le capteur de niveau 4 selon l'invention est aussi utilisé pour informer le système FADEC ou le cockpit sur le niveau d'huile d'un réservoir d'huile 3.

Le système de maintenance d'une turbomachine 1 selon l'invention comprend aussi des moyens de communication 6, couplés aux moyens de transmission 5, pour communiquer à l'extérieur de l'aéronef 2 (à l'extérieur de la cabine de l'aéronef 2 plus précisément) une information représentative d'un niveau d'huile mesuré par ledit capteur 4. Comme cela est illustré à la figure 2, les moyens de communication 6 permettent de communiquer avec un appareil mobile 50 situé à l'extérieur de la turbomachine. L'appareil mobile 50 comprend des moyens d'affichage tel un écran, par exemple de type LCD ou LED.

Des moyens d'affichage peuvent par exemple être situé sur une surface externe du réservoir d'huile 3 ou sur une nacelle de la turbomachine 1, par exemple à proximité d'une trappe de service (dans ce dernier cas, il n'est pas nécessaire d'ouvrir ladite trappe de service pour visualiser l'information donnée par les moyens d'affichage). De tels moyens d'affichage peuvent être configurés pour afficher une information relative à un niveau d'huile de manière permanente ou pas. Dans le cas où les moyens d'affichage sont situés sur une surface externe du réservoir d'huile et comprendrait des moyens de commande, par exemple, un condensateur pourrait se charger lors de l'appui sur les moyens de commande pour activer l'affichage.

L'appareil mobile 50 comprend de préférence des moyens de commande couplés aux moyens d'affichage pour commander l'affichage ou non d'une information relative à un niveau d'huile du réservoir d'huile 3. Par exemple, les moyens de commande comprennent un bouton de commande qui peut être activé par un opérateur afin de connaître un niveau d'huile mesuré par le capteur 4. Le niveau d'huile mesuré par le capteur 4 est transmis à l'appareil mobile 50 grâce aux moyens de transmission 5 et de communication 6 de la turbomachine. Un tel bouton de commande pourrait également être utilisé pour valider le fait qu'un remplissage du réservoir d'huile 3 a été fait. L'utilisation de moyens d'affichage permet également d'indiquer qu'une opération de remplissage du réservoir d'huile 3 a été faite. Cela permet aussi de faciliter et d'écourter la procédure de remplissage d'un réservoir d'huile 3 d'une turbomachine 1.

Selon un autre mode de réalisation possible, les moyens de communication 6 comprennent une puce RFID ou des moyens de communication en champ proche, afin de pouvoir communiquer avec un appareil mobile 50 par exemple. D'autres exemples sont possibles.

Le système de maintenance d'une turbomachine 1 selon l'invention peut aussi comprendre des moyens de traitement pour traiter un signal transmis par les moyens de transmission 5. Il est alors possible de fournir d'autres grandeurs qu'un niveau d'huile à un opérateur. Grâce à ces moyens de traitement, on peut par exemple afficher un besoin de remplissage d'un réservoir d'huile 3. L'identification d'un tel besoin peut se faire sur base de mesures durant des vols précédents, de calculs (consommation de vols précédents par exemple) ou de données enregistrées (missions types, marges prédéfinies) par exemple.

Les inventeurs proposent donc aussi une procédure de maintenance au sol d'une turbomachine 1 selon l'invention où grâce aux moyens de communication 6, un opérateur va pouvoir lire, au sol, avec un appareil mobile 50, une information relative à un niveau d'huile mesuré par le capteur 4. Quand les moyens de communication 6 comprennent des moyens d'affichage, la lecture est directe. Quand les moyens de communication 6 comprennent des moyens de communication en champ proche ou une puce RFID, la lecture est indirecte et effectuée avec un appareil mobile 50. L'opérateur utilise alors typiquement un appareil mobile 50 ou un boîtier ou lecteur qui peut lire l'information communiquée par les moyens de communication 6. Cet appareil mobile 50 comprend des moyens d'affichage tel un écran sur lequel est affiché une information relative à un niveau d'huile mesuré par le capteur 4.

A partir de cette lecture de l'information communiquée par les moyens de communication 6 (directe ou indirecte), il est possible de déduire un état de remplissage du réservoir d'huile 3.

Dans le cadre de la présente invention, le réservoir d'huile 3, le capteur 4, les moyens de transmission 5 et les moyens de communication 6 sont décrits comme appartenant à la turbomachine 1. Cette formulation ne peut pas être utilisée pour limiter la portée de l'invention.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

L'invention peut être résumée comme suit.

Système de maintenance d'une turbomachine 1 d'aéronef 2, comprenant : un réservoir d'huile 3, un capteur 4 apte à mesurer un niveau d'huile dans le réservoir d'huile 3, des moyens de transmission 5 d'un signal couplés audit capteur 4 pour transmettre une information relative à un niveau d'huile mesuré par ledit capteur 4, des moyens de communication 6, couplés auxdits moyens de transmission 5, pour communiquer à l'extérieur de l'aéronef 2 une information représentative d'un niveau d'huile mesuré par ledit capteur 4 à un appareil mobile 50 apte à communiquer avec les moyens communication 6, l'appareil mobile 50 comprenant des moyens d'affichage pour afficher une information représentative d'un niveau d'huile communiquée par les moyens de communication 6 à un opérateur situé au sol en-dehors de l'aéronef 2.

Ainsi, l'invention permet de connaître, à proximité d'une turbomachine 1 à l'arrêt, une information relative à un niveau d'huile d'un réservoir d'huile 3. Structurellement parlant, l'invention se distingue de l'art antérieur par le fait que l'affichage d'une information relative à un niveau d'huile d'un réservoir d'huile 3 a lieu sur ou à proximité du réservoir d'huile 3. Pour cela, le réservoir d'huile 3 ou la turbomachine 1 est équipé de moyens de communication 6 pour qu'un opérateur puisse avoir accès au niveau d'huile soit directement soit au moyen d'un appareil mobile 50 qui serait passé à proximité de ces moyens de communication 6 (de type RFID par exemple).

## Revendications

1. Système de maintenance d'une turbomachine (1) d'aéronef (2) comprenant :
- une turbomachine (1) comprenant :
∘ un réservoir d'huile (3),
∘ un capteur (4) apte à mesurer un niveau d'huile dans le réservoir d'huile (3),
∘ des moyens de transmission (5) d'un signal couplés audit capteur (4) pour transmettre une information relative à un niveau d'huile mesuré par ledit capteur (4),
**caractérisé en ce que** :
- ladite turbomachine (1) comprend des moyens de communication en champ proche (6), couplés auxdits moyens de transmission (5), pour communiquer en champ proche à l'extérieur de l'aéronef (2) une information représentative d'un niveau d'huile mesuré par ledit capteur (4), et **en ce que**
- ledit système de maintenance comprend un appareil mobile (50) apte à communiquer en champ proche avec lesdits moyens de communication en champ proche (6) et comprenant des moyens d'affichage pour afficher ladite information représentative d'un niveau d'huile communiquée par lesdits moyens de communication en champ proche (6) à un opérateur situé au sol en-dehors de l'aéronef (2).

2. Système de maintenance selon la revendication précédente configuré de sorte que ledit appareil mobile (50) est destiné à être utilisé en dehors dudit aéronef (2) et en ce que ledit appareil mobile (50) est apte à communiquer en champ proche depuis l'extérieur dudit aéronef (2) avec lesdits moyens de communication en champ proche (6).

3. Système de maintenance selon la revendication précédente **caractérisé en ce que** ledit appareil mobile (50) est dans un rayon de maximum dix mètres autour de ladite turbomachine (1), de préférence maximum cinq mètres.

4. Système de maintenance selon l'une quelconque des revendications précédentes **caractérisé en ce que** lesdits moyens de communication (6) comprennent une puce RFID.

5. Système de maintenance selon l'une quelconque des revendications précédentes **caractérisé en ce qu'**il comprend en outre des moyens de traitement pour traiter un signal transmis par les moyens de transmission (5) et des moyens d'estimation aptes à estimer un besoin de remplissage dudit réservoir d'huile (3) à partir de l'information transmise par les moyens de transmission (5).

6. Système de maintenance selon la revendication précédente **caractérisé en ce que** lesdits moyens de traitement et d'estimation sont incorporés dans ledit appareil mobile (50).

7. Système de maintenance selon l'une quelconque des revendications précédentes **caractérisé en ce que** lesdits moyens de communication (6) sont aptes à communiquer en champ proche une information représentative d'un niveau d'huile mesuré par ledit capteur (4) dans un rayon de dix mètres au plus autour de ladite turbomachine (1), de préférence cinq mètres au plus.

8. Système de maintenance selon l'une quelconque des revendications précédentes **caractérisé en ce que** lesdits moyens d'affichage dudit appareil mobile (50) comprennent un écran à LED ou LCD.

9. Système de maintenance selon l'une quelconque des revendications précédentes **caractérisé en ce que** lesdits moyens d'affichage sont configurés pour afficher ladite information de manière permanente.

10. Système de maintenance selon l'une quelconque des revendications 1 à 8 **caractérisé en ce que** ledit appareil mobile (50) comprend des moyens de commande couplés auxdits moyens d'affichage, configurés pour commander un affichage de ladite information.

11. Système de maintenance selon l'une quelconque des revendications précédentes **caractérisé en ce qu'**il comprend des moyens d'enregistrement et de stockage couplés auxdits moyens de transmission (5) pour enregistrer des informations relatives à des niveaux d'huile mesurés par ledit capteur (4).

12. Procédé de maintenance au sol d'une turbomachine (1) d'un aéronef (2) et comprenant les étapes suivantes :
- fournir une turbomachine (1) comprenant :
∘ un réservoir d'huile (3),
∘ un capteur (4) apte à mesurer un niveau d'huile dans le réservoir d'huile (3),
∘ des moyens de transmission (5) d'un signal couplés audit capteur (4) pour transmettre une information relative à un niveau d'huile mesuré par ledit capteur (4),
∘ des moyens de communication en champ proche (6), couplés auxdits moyens de transmission (5), pour communiquer en champ proche à l'extérieur de l'aéronef (2) une information représentative d'un niveau d'huile mesuré par ledit capteur (4),
- fournir à proximité de ladite turbomachine (1) et en-dehors de l'aéronef (2) un appareil mobile (50) apte à communiquer en champ proche avec lesdits moyens de communication en champ proche (6) et comprenant des moyens d'affichage pour afficher une information représentative d'un niveau d'huile communiquée par lesdits moyens de communication en champ proche (6),
- lire à l'extérieur de l'aéronef (2) ladite information communiquée en champ proche par les moyens de communication en champ proche (6) en visualisant un affichage sur ledit appareil mobile (50),
- déduire un état de remplissage dudit réservoir d'huile (3) à partir de la lecture effectuée à l'étape précédente.

13. Procédé de maintenance au sol selon la revendication précédente comprenant une étape de traitement par ledit appareil mobile (50) de l'information communiquée en champ proche par lesdits moyens de communication (6).

14. Procédé de maintenance au sol selon l'une quelconque des deux revendications précédentes **caractérisé en ce que** ledit appareil mobile (50) est fourni dans un rayon de maximum dix mètres autour de ladite turbomachine (1), de préférence maximum cinq mètres.

## Patentansprüche

1. System zur Wartung eines Turbostrahltriebwerks (1) eines Luftfahrzeugs (2), umfassend:
ein Turbostrahltriebwerk (1), weiter umfassend:
einen Ölbehälter (3);
einen Sensor (4), der einen Ölstand im Ölbehälter (3) messen kann; und
einen Sender (5), der zum Senden eines mit dem Sensor (4) gekoppelten Signals konfiguriert ist, um Informationen bezüglich eines von dem Sensor (4) gemessenen Ölstands zu senden;
**dadurch gekennzeichnet, dass**:
das Turbostrahltriebwerk (1) Nahfeldkommunikationsmittel (6) umfasst, die mit dem Sender (5) gekoppelt sind, zur Nahfeldkommunikation von Informationen, die einen von dem Sensor (4) gemessenen Ölstand darstellen, an die Außenseite des Luftfahrzeugs (2); und
wobei das Wartungssystem eine mobile Einrichtung (50) umfasst, die in der Lage ist, mit den Nahfeldkommunikationsmitteln (6) zu kommunizieren, und eine Anzeige umfasst, die zum Anzeigen der Informationen konfiguriert ist, die einen Ölstand darstellen, der von den Nahfeldkommunikationsmitteln (6) an einen außerhalb des Luftfahrzeugs (2) am Boden befindlichen Bediener übermittelt wird.

2. System zur Wartung nach dem vorstehenden Anspruch, wobei die mobile Einrichtung (50) dazu bestimmt ist, am Boden außerhalb des Luftfahrzeugs (2) verwendet zu werden, und wobei die mobile Einrichtung (50) zur Nahfeldkommunikation von der Außenseite des Luftfahrzeugs (2) mit den Nahfeldkommunikationsmitteln (6) in der Lage ist.

3. System zur Wartung nach dem vorstehenden Anspruch, **dadurch gekennzeichnet, dass** sich die mobile Einrichtung (50) innerhalb eines maximalen Radius von zehn Metern um das Turbostrahltriebwerk (1), vorzugsweise maximal fünf Metern, befindet.

4. System zur Wartung nach einem der vorstehenden Ansprüche, **dadurch gekennzeichnet, dass** die Nahfeldkommunikationsmittel (6) einen RFID-Chip umfassen.

5. System zur Wartung nach einem der vorstehenden Ansprüche, weiter umfassend Verarbeitungsmittel zum Verarbeiten eines vom Sender (5) gesendeten Signals und Schätzmittel, die in der Lage sind, einen Bedarf zum Füllen des Ölbehälters (3) aus den vom Sender (5) gesendeten Informationen zu schätzen.

6. System zur Wartung nach dem vorstehenden Anspruch, **dadurch gekennzeichnet, dass** die Verarbeitungs- und Schätzmittel in der mobilen Einrichtung (50) integriert sind.

7. System zur Wartung nach einem der vorstehenden Ansprüche, **dadurch gekennzeichnet, dass** die Kommunikationsmittel (6) zur Nahfeldkommunikation von Informationen, die einen vom Sensor (4) gemessenen Ölstand darstellen, innerhalb eines Radius von nicht mehr als zehn Metern um das Turbostrahltriebwerk (1), vorzugsweise nicht mehr als fünf Metern, in der Lage sind.

8. System zur Wartung nach einem der vorstehenden Ansprüche, **dadurch gekennzeichnet, dass** die Anzeige der mobilen Einrichtung (50) einen LED- oder LCD-Bildschirm umfasst.

9. System zur Wartung nach einem der vorstehenden Ansprüche, **dadurch gekennzeichnet, dass** die Anzeige konfiguriert ist, die Informationen dauerhaft anzuzeigen.

10. System zur Wartung nach einem der Ansprüche 1 bis 8, **dadurch gekennzeichnet, dass** die mobile Einrichtung (50) eine Steuerung umfasst, die mit der Anzeige gekoppelt ist, konfiguriert, die Anzeige der Informationen zu steuern.

11. System zur Wartung nach einem der vorstehenden Ansprüche, weiter umfassend mit dem Sender (5) gekoppelte Aufzeichnungs- und Speichermittel zum Aufzeichnen von Informationen, die sich auf von dem Sensor (4) gemessene Ölstände beziehen.

12. Verfahren zum Warten eines Turbostrahltriebwerks (1) eines Luftfahrzeugs (2) am Boden, und umfassend:
- Bereitstellen eines Turbostrahltriebwerks (1), weiter umfassend:
∘ einen Ölbehälter (3);
∘ einen Sensor (4), der in der Lage ist, einen Ölstand im Ölbehälter (3) zu messen;
∘ einen Sender (5) zum Senden eines mit dem Sensor (4) gekoppelten Signals, um Informationen bezüglich eines von dem Sensor (4) gemessenen Ölstands zu senden; und
∘ Nahfeldkommunikationsmittel (6), die mit dem Sender (5) gekoppelt sind, zur Nahfeldkommunikation von Informationen, die einen von dem Sensor (4) gemessenen Ölstand darstellen, mit der Außenseite des Luftfahrzeugs (2);
- Bereitstellen, in der Nähe des Turbostrahltriebwerks (1) und außerhalb des Luftfahrzeugs (2), einer mobilen Einrichtung (50), die in der Lage ist, mit den Nahfeldkommunikationsmitteln (6) zu kommunizieren, und die eine Anzeige zum Anzeigen von Informationen umfasst, die einen Ölstand darstellen, der von den Nahfeldkommunikationsmitteln (6) kommuniziert wird;
- Lesen, außerhalb des Luftfahrzeugs (2), der von den Nahfeldkommunikationsmitteln (6) durch Nahfeldkommunikation kommunizierten Informationen durch Betrachten einer Anzeige auf der mobilen Einrichtung (50); und
- Ableiten eines Füllstands des Ölbehälters (3) von dem Lesen.

13. Verfahren nach dem vorstehenden Anspruch, umfassend einen Verarbeitungsschritt, von der mobilen Einrichtung (50), von Informationen, die von den Nahfeldkommunikationsmitteln (6) durch Nahfeldkommunikation kommuniziert werden.

14. Verfahren nach einem der zwei vorstehenden Ansprüche, **dadurch gekennzeichnet, dass** sich die mobile Einrichtung (50) innerhalb eines maximalen Radius von zehn Metern um das Turbostrahltriebwerk (1), vorzugsweise maximal fünf Metern, befindet.

## Claims

1. System for maintenance of a turbine engine (1) of an aircraft (2) comprising:
a turbine engine (1) further comprising:
an oil reservoir (3);
a sensor (4) able to measure an oil level in the oil reservoir (3); and
a transmitter (5) configured for transmitting a signal coupled to said sensor (4) in order to transmit information relating to an oil level measured by said sensor (4);
**characterised in that**:
said turbine engine (1) comprises near-field communication means (6), coupled to said transmitter (5), for near-field communicating to the outside of the aircraft (2) information representing an oil level measured by said sensor (4); and
wherein said maintenance system comprises a mobile apparatus (50) able to near-field communicate with said near-field communication means (6) and comprising a display configured for displaying said information representing an oil level communicated by said near-field communication means (6) to an operator situated on the ground outside the aircraft (2).

2. System for maintenance according to previous claim wherein said mobile apparatus (50) is intended to be used on the ground outside the aircraft (2) and wherein said mobile apparatus (50) is able to near-field communicate from the outside of the aircraft (2) with the near-field communication means (6).

3. System for maintenance according to previous claim **characterised in that** said mobile apparatus (50) is within a maximum radius of ten meters around said turbine engine (1), preferably maximum five meters.

4. System for maintenance according to any of previous claims **characterised in that** said near-field communication means (6) comprise an RFID chip.

5. System for maintenance according to any of previous claims further comprising processing means for processing a signal transmitted by the transmitter (5) and estimation means able to estimate a requirement for filling said oil reservoir (3) from the information transmitted by the transmitter (5).

6. System for maintenance according to previous claim **characterised in that** said processing and estimation means are incorporated in said mobile apparatus (50).

7. System for maintenance according to any of previous claims **characterised in that** said communication means (6) are able to near-field communicate information representing an oil level measured by said sensor (4) within a radius of no more than ten meters around said turbine engine (1), preferably no more than five meters.

8. System for maintenance according to any of previous claims **characterised in that** said display of said mobile apparatus (50) comprises an LED or LCD screen.

9. System for maintenance according to any of previous claims **characterised in that** said display is configured to display said information permanently.

10. System for maintenance according to any of claims 1 to 8 **characterised in that** said mobile apparatus (50) comprises a control coupled to said display, configured to control the display of said information.

11. System for maintenance according to any of previous claims further comprising recording and storage means coupled to said transmitter (5) for recording information relating to oil levels measured by said sensor (4).

12. Method for maintaining a turbine engine (1) of an aircraft (2) on the ground and comprising:
- providing a turbine engine (1) further comprising:
∘ an oil reservoir (3);
∘ a sensor (4) able to measure an oil level in the oil reservoir (3);
∘ a transmitter (5) for transmitting a signal coupled to said sensor (4) in order to transmit information relating to an oil level measured by said sensor (4); and
∘ near-field communication means (6), coupled to said transmitter (5), for near-field communicating to the outside of the aircraft (2) information representing an oil level measured by said sensor (4);
- providing, in the vicinity of said turbine engine (1) and outside of the aircraft (2), a mobile apparatus (50) able to communicate with said near-field communication means (6) and comprising a display for displaying information representing an oil level communicated by said near-field communication means (6);
- reading, outside the aircraft (2), said information near-field communicated by the near-field communication means (6) by viewing a display on said mobile apparatus (50); and
- deducing a fill level of said oil reservoir (3) from said reading.

13. Method according to previous claim comprising a processing step by said mobile apparatus (50) of the information near-field communicated by said near-field communication means (6).

14. Method according to any of the two previous claims **characterized in that** said mobile apparatus (50) is provided within a maximum radius of ten meters around said turbine engine (1), preferably maximum five meters.
